# EUROPÄISCHE PATENTSCHRIFT

(11) **EP 0 717 695 B1**
(45) Veröffentlichungstag und Bekanntmachung des Hinweises auf die Patenterteilung: **06.11.1996**
(21) Anmeldenummer: 94925335.5
(22) Anmeldetag: 31.08.1994
(51) Int. Cl.: B62J 11/02, B60C 23/10, F04B 33/00

(54) **LUFTPUMPENEINSATZ FÜR DAS SATTELSTÜTZENROHR EINES ZWEIRADES**
AIR-PUMP INSERT FOR THE SADDLE-SUPPORTING TUBE OF A TWO-WHEELED VEHICLE
ENSEMBLE POMPE DE GONFLAGE S'INTRODUISANT DANS LE TUBE DE SELLE D'UN VEHICULE A DEUX ROUES

(30) Priorität: 11.09.1993 DE 4330844; 13.05.1994 WO PCT/DE94/00551
(43) Veröffentlichungstag der Anmeldung: 26.06.1996
(73) Patentinhaber: TECONOMIC FAHRZEUGSYSTEMTECHNIK GMBH, D-34127 Kassel (DE)
(72) Erfinder: SCHMIDTKUNZ, Klaus, Jürgen, D-34127 Kassel (DE)
(74) Vertreter: Walther, Robert, Dipl.-Ing.
(86) Internationale Anmeldenummer: DE9400998
(87) Internationale Veröffentlichungsnummer: WO9507207

(56) Entgegenhaltungen:
- DE-A- 3 602 279
- DE-U- 7 337 703
- DE-U- 9 005 166
- FR-A- 2 337 655
- US-A- 4 842 290
- US-A- 5 051 073

## Beschreibung

Die Erfindung betrifft einen Luftpumpeneinsatz für das Sattelstützenrohr eines Zweirades, insbesondere eines Fahrrades, mit einer in einem Luftpumpendruckrohr axial beweglichen Schubstange mit Kolben, wobei die Schubstange einen auf das Ventil eines Rades aufsetzbaren Ventilkopf aufweist und wobei die durch die Schubstange in dem Luftpumpendruckrohr komprimierte Luft durch die Schubstange zum Ventilkopf führbar ist.

Die bekannten Sattelstützen bestehen aus einem sogenannten Sattelstützenrohr, welches an seinem oberen Ende mit einer Klemmvorrichtung für den Sattel ausgerüstet ist. Andere Sattelstützenrohre sind so ausgebildet, daß auf dem oberen Rohrabschnitt ein Sattel mit eigener Klemmvorrichtung befestigt werden kann. In jeden Fall sind die bekannten Sattelstützenrohre an ihrem unteren Ende offen.

Zum Aufpumpen des Fahrradreifens wird eine Luftpumpe benötigt, die in der Regel am Fahrrad mitgeführt wird. Meistens ist eine derartige Luftpumpe am Rahmen außen klemmbar befestigt. Nachteilig hierbei ist, daß die Luftpumpe zum einen für jeden zuganglich ist und mithin die Gefahr des Diebstahls besteht. Auch ist nicht zu verkennen, daß eine an derart exponierter Lage befestigte Luftpumpe, insbesondere bei Befestigung an einem Mountain-Bike, starken Verschmutzungen ausgesetzt ist. Es ist daher bereits vorgeschlagen worden, die Luftpumpe an einem geschützten und sicheren Ort am Fahrrad unterzubringen.

Aus der US-A 5,051,073 ist eine spezielle Luftpumpe bekannt, wobei die Schubstange einen Schlauch mit Ventilansatz aufweist; hierbei wird die durch die Schubstange in dem Luftpumpendruckrohr komprimierte Luft durch die Schubstange zum Ventilansatz geführt. Diese Pumpe ist besonders widerstandsfähig und preiswert in der Herstellung. Jedoch ist in dieser Literaturstelle nicht der Gedanke offenbart, eine Luftpumpe in dem Sattelstützenrohr eines Fahrrades unterzubringen.

Aus dem DE-G 73 37 703 ist ein Luftpumpeneinsatz bekannt, bei der das Sattelstützenrohr als Aufbewahrungsbehälter für die Luftpumpe dient. Gehalten wird die Luftpumpe in dem Sattelstützenrohr durch eine Schraube, die in das Sattelstützenrohr einschraubbar ist. D.h., daß zum Pumpen die Luftpumpe in jedem Fall aus dem Sattelstützenrohr entfernt werden muß. Dies ist umständlich, insbesondere wenn man bedenkt, daß zum Entfernen der Schraube möglicherweise gesondertes Werkzeug mitgeführt werden muß und die besagte Schraube verlorengehen kann.

Aus der US-A 4,842,290 ist ein Luftpumpeneinsatz der eingangs genannten Art bekannt, bei dem das Sattelstützenrohr das Luftpumpendruckrohr für die Luftpumpe bildet. Hierbei weist die von dem Luftpumpendruckrohr aufgenommene Schubstange einen Schlauch mit einem Verbindungsstück zum Ansatz an das Reifenventil auf. Nachteilig hierbei ist, daß, da das Luftpumpendruckrohr das Sattelstützenrohr bildet, dieses wegen der Führung der Schubstange nicht nur sehr genau, sondern auch sehr stabil ausgebildet sein muß. D.h., die Herstellung eines derartigen Luftpumpeneinsatzes ist teuer, wobei insbesondere, wenn das Sattelstützenrohr, das in diesem Fall als Luftpumpendruckrohr dient, nicht genau gefertigt ist, Probleme hinsichtlich des erreichbaren Kompressionsdruckes auftreten können.

Der Erfindung liegt daher die Aufgabe zugrunde, einen Luftpumpeneinsatz der eingangs genannten Art derart weiterzubilden, daß der Luftpumpeneinsatz von jedem Sattelstützenrohr aufnehmbar ist, ohne daß das Sattelstützenrohr in spezieller Weise bearbeitet werden müßte.

Die Aufgabe wird erfindungsgemäß dadurch gelöst, daß das Luftpumpendruckrohr eine Klemmeinrichtung zur Fixierung des Luftpumpeneinsatzes in dem Sattelstützenrohr aufweist. Durch die Klemmeinrichtung wird zum einen erreicht, daß der Luftpumpeneinsatz herausnehmbar und somit getrennt vom Sattelstützenrohr einsetzbar ist, d.h., der Luftpumpeneinsatz kann zum Aufpumpen sowohl in im Sattelstützenrohr eingesetzten Zustand, als auch alleine benutzt werden. Zum zweiten ist als Vorteil zu vermerken, daß als Folge der Klemmeinrichtung der Einsatz in Sattelstützenrohren mit unterschiedlichem Durchmesser einsetzbar ist, da durch die Klemmeinrichtung unterschiedliche Durchmesser kompensiert werden können. Gerade bei sogenannten Patentsattelstützen sind Durchmesser von ca 25 mm bis 32 mm bekannt. Diese Patentsattelstützen werden bevorzugt bei Mountain-Bikes eingesetzt.

Im einzelnen umfaßt die Klemmeinrichtung einen elastischen Klemmring, der von einem von dem Luftpumpendruckrohr aufgenommenen Klemmteller zusammendrückbar ist. Hierbei besitzt der Klemmteller einen Gewindestift, der den Klemmring durchragt, und der von einem im Luftpumpendruckrohr angeordneten Gewindestück drehbar aufnehmbar ist. Das Gewindestück bildet vorteilhaft den endseitigen, luftdichten Abschluß des Luftpumpendruckrohres.

Die Höhe und Stärke des Klemmringes sind hierbei so bemessen, daß der Luftpumpeneinsatz kraftschlüssig von dem Sattelstützenrohr mit dem jeweiligen Durchmesser aufnehmbar ist. Die Befestigung des Luftpumpeneinsatzes im Sattelstützenrohr erfolgt hierbei derart, daß der Klemmring soweit zusammengedrückt wird, daß der Einsatz gerade noch in das Sattelstützenrohr einschiebbar ist. In der Endstellung wird das Luftpumpendruckrohr verdreht, bis der Klemmring fest an der inneren Wandung des Sattelstützenrohres anliegt. Durch das Vorspannen des Klemmringes ist die Selbsthemmung des Ringes an der Innenwandung des Sattelstützenrohres so groß, daß die Gefahr des Mitdrehens nicht besteht.

Im einzelnen ist weiterhin vorgesehen, daß die Schubstange, die endseitig als Kolben vorzugsweise einen Verschlußstopfen und eine Kompressionslasche aufweist, in einer im Luftpumpendruckrohr angeordneten Verschlußkappe führbar ist. Die Kompressionslasche, die axial beweglich vom Verschlußstopfen aufnehmbar ist, schließt beim Kompressionsvorgang den Druckraum ab. Der Druckraum setzt sich hierbei aus dem Innenraum des Luftpumpendruckrohres und dem Inneraum der Schubstange zusammen.

Wie bei jeder anderen Luftpumpe ist auch hier ein Lufteinlaß in das Luftpumpendruckrohr vorgesehen. Der Lufteinlaß wird bevorzugt durch einen Spalt, insbesondere Ringspalt, zwischen Verschlußkappe und Schubstange gebildet. Die angesaugte Luft wird an der Schubstange vorbei in den durch das Luftpumpendruckrohr gebildeten Druckraum befördert, um dann komprimiert zu werden. Hierbei ist während des Saugvorgangs der Druckraum geöffnet, während des Kompressionsvorgangs ist der Druckraum jedoch verschließbar, wie dies allgemein von Luftpumpen her bekannt ist. Zum Einlaß der Luft in den Druckraum ist ein Spalt zwischen Luftpumpendruckrohr und Verschlußstopfen bzw. zwischen Kompressionslasche und Verschlußstopfen vorgesehen. Zum Übergang der kompromierten Luft vom Druckraum in die Schubstange ist eine Öffnung vom Druckraum zur Schubstange in dem Verschlußstopfen angeordnet.

Um einen hohen Pumpendruck zu erzielen, wird nach einer besonderen Ausführungsform vorgeschlagen, in die Schubstange ein Einsatzelement einzusetzen, wodurch der Kompressionsraum, der auch durch den Innenraum der Schubstange gebildet wird, verkleinert wird. Dieses Einsatzelement, beispielsweise ein Schlauch, weist an seinem einen Ende eine Öffnung zum Druckraum auf und ist am anderen Ende mit dem Ventilkopf verbunden. Gehalten wird das Einsatzelement an seinem einen Ende durch einen in der Schubstange angeordneten Verschlußstopfen.

Anhand der Zeichnungen wird die Erfindung nachstehend beispielhaft näher erläutert.
- Fig. 1: Zeigt die Anordnung des Sattelstützenrohres mit Sattel im vertikalen Rahmenrohr des Fahrrades;
- Fig. 2: zeigt den Luftpumpeneinsatz für das Sattelstützenrohr im Schnitt;
- Fig. 3: zeigt in Vergrößerung die Klemmeinrichtung aus Fig. 2.

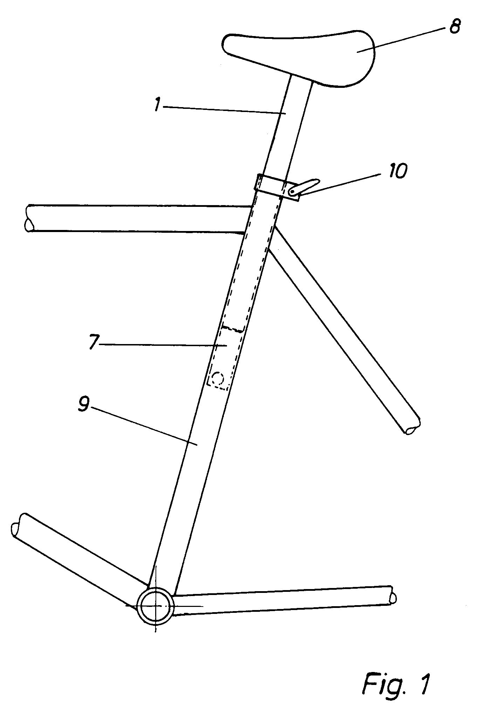

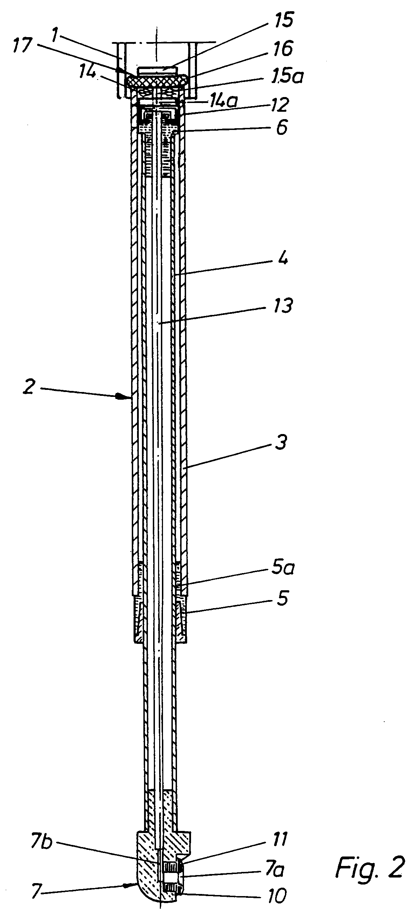

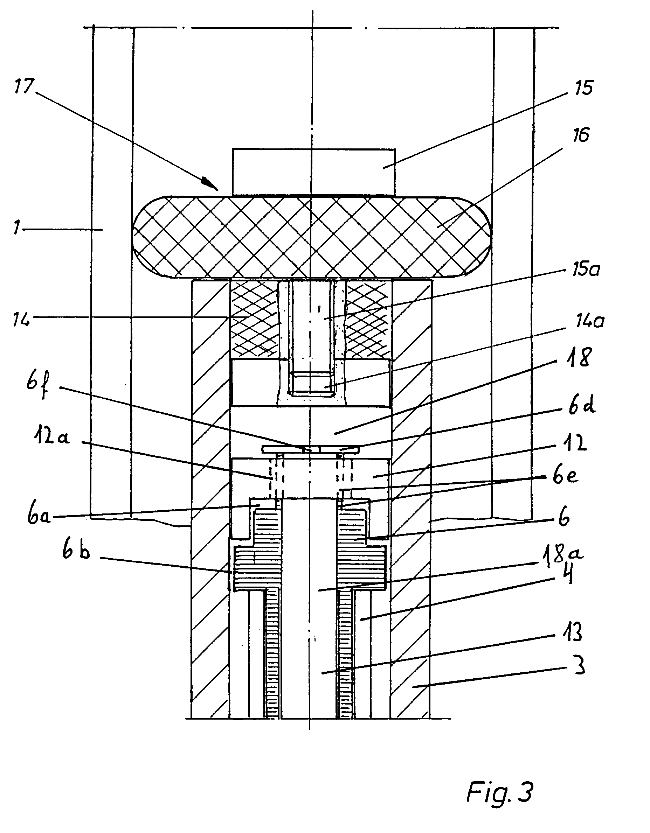

Gemäß Fig. 1 nimmt das mit 9 bezeichnete Rahmenrohr des Fahrradrahmens das Sattelstützenrohr 1 auf. Zur Befestigung des Sattelstützenrohres 1 in dem Rahmenrohr 9 ist eine Klemmvorrichtung 10 vorgesehen. Auf dem Sattelstützenrohr 1 befindet sich endseitig der Sattel 8, der mittels einer Sattelklemmvorrichtung 2 mit dem Sattelstützenrohr in bekannter Weise verbunden ist (Fig. 2, Fig. 3).

Von dem Sattelstützenrohr 1 wird der insgesamt mit 2 bezeichnete Luftpumpeneinsatz aufgenommen. Der Luftpumpeneinsatz besitzt das Luftpumpendruckrohr 3, das die Schubstange 4 axial beweglich aufnimmt. Die Schubstange 4 besitzt an dem dem Sattelstützenrohr zugewandten Ende den Kolben 6 und an ihrem anderen Ende den insgesamt mit 7 bezeichneten Ventilkopf. Endseitig verschlossen ist das Luftpumpendruckrohr durch das Gewindestück 14 der Klemmeinrichtung 17. Der Lufteinlaß erfolgt durch einen Ringspalt 5a zwischen Verschlußkappe 5 und Schubstange 4.

In das Luftpumpendruckrohr 1 gelangt die Luft durch einen weiteren Ringspalt 6a zwischen Verschlußstopfen 6 und der Lasche 12, die sich auf dem Verschlußstopfen 6 befindet. Die bewegliche Kompressionslasche 12 dichtet den Ringspalt 6a während des Kompressionsvorgangs ab. Axial beweglich gehalten wird die Kompressionslasche 12 durch den Teller 6d, der Bestandteil des Verschlußstopfens 6b ist. D. h., die Druckerhöhung in dem Druck-oder Kompressionsraum 18 bzw.18a wird im wesentlichen durch die Abdichtung durch die Kompressionslasche 12 bewerkstelligt. Der Teller 6d ist hierbei durch den Bund 6e mit dem Verschlußstopfen 6 verbunden. In dem Teller 6d befindet sich die Bohrung 6f zum Durchlaß der Luft in den Innenraum der Schubstange 4 bzw. in das Innere des Einsatzelementes 13. D. h., die Luft gelangt an dem Verschlußstopfen vorbei, durch den Ringspalt 6a, 6b, den Ringspalt 12a zwischen Kompressionslasche 12 und Steg 6e und die Bohrung 6f in das Einsatzelement 13 bzw. das Innere der Schubstange 4. Der Ventilkopf 7 ist durch den Luftkanal 7b mit dem Innenraum der Schubstange verbunden, wobei luftaustrittseitig konzentrisch zum Luftkanal 7b ein Ventilgummi 11 vorgesehen ist, das durch den Befestigungsring 10 gehalten wird.

Das in der Schubstange 4 befindliche als Schlauch ausgebildete Einsatzelement 13 ist einerseits mit dem Luftkanal 7b verbunden; andererseits wird es durch den Verschlußstopfen 6 gehalten.

Von dem Gewindestück 14 mit dem Gewinde 14a wird der Gewindestift 15a des Klemmtellers 15 aufgenommen. Durch den Klemmteller 15 wird der Klemmring 16 unter Bildung eines Wulstes zusammengedrückt, bis er fest an der Innenwandung des Sattelstützenrohres 1 anliegt.

## Patentansprüche

1. Luftpumpeneinsatz für das Sattelstützenrohr eines Zweirades, insbesondere eines Fahrrades, mit einer in einem Luftpumpendruckrohr (3) axial beweglichen Schubstange (4) mit Kolben, wobei die Schubstange (4) einen auf das Ventil eines Rades aufsetzbaren Ventilkopf (7) aufweist und wobei die durch die Schubstange (4) in dem Luftpumpendruckrohr (1) komprimierte Luft durch die Schubstange (4) zum Ventilkopf (7) führbar ist,
**dadurch gekennzeichnet**, daß das Luftpumpendruckrohr (3) eine Klemmeinrichtung (17) zur Fixierung des Luftpumpeneinsatzes (2) in dem Sattelstützenrohr (1) aufweist.

2. Luftpumpeneinsatz nach Anspruch 1,
**dadurch gekennzeichnet**, daß die Klemmeinrichtung (17) einen elastischen Klemmring (16) umfaßt, der von einem von dem Luftpumpendruckrohr (3) aufgenommenen Klemmteller (15) zusammendrückbar ist.

3. Luftpumpeneinsatz nach Anspruch 2,
**dadurch gekennzeichnet**, daß der Klemmteller (15) einen Gewindestift (15a) aufweist, der den Klemmring (16) durchragt, und der von einem im Luftpumpendruckrohr angeordneten Gewindestück (14) drehbar aufnehmbar ist.

4. Luftpumpeneinsatz nach Anspruch 3,
**dadurch gekennzeichnet**, daß das Gewindestück (14) das Luftpumpendruckrohr (3) endseitig luftdicht abschließt.

5. Luftpumpeneinsatz nach Anspruch 1,
**dadurch gekennzeichnet**, daß die Schubstange (4) in einer im Luftpumpendruckrohr (1) angeordneten Verschlußkappe (5) führbar ist.

6. Luftpumpeneinsatz nach Anspruch 1,
**dadurch gekennzeichnet**, daß die Schubstange (4) als Kolben endseitig einen Verschlußstopfen (6) und eine Kompressionslasche (12) aufweist.

7. Luftpumpeneinsatz nach Anspruch 1,
**dadurch gekennzeichnet**, daß vom Druckraum (18) des Luftpumpendruckrohres eine Öffnung (6f) zur Schubstange (4) vorgesehen ist.

8. Luftpumpeneinsatz nach Anspruch 5,
**dadurch gekennzeichnet**, daß zum Lufteinlaß zwischen Verschlußkappe (5) und Schubstange (4) ein Spalt (5a) vorgesehen ist.

9. Luftpumpeneinsatz nach einem oder mehreren der Ansprüche 1 - 8,
**dadurch gekennzeichnet**, daß zum Einlaß der Luft in den Druckraum (18) ein Ringspalt (6a, 6b) zwischen Luftpumpendruckrohr (3) und Verschlußstopfen (6) bzw. zwischen der Kompressionslasche (12) und dem Steg 6e des Verschlußstopfens (6) vorgesehen ist.

10. Luftpumpeneinsatz nach Anspruch 9,
**dadurch gekennzeichnet**, daß der Verschlußstopfen (6) die Kompressionslasche (12) axial beweglich aufnimmt, wobei die Lasche (12) beim Saugvorgang den Ringspalt (6a) freigibt, hingegen beim Kompressionsvorgang den Ringspalt (6a) abdichtet.

11. Luftpumpeneinsatz nach Anspruch 7,
**dadurch gekennzeichnet**, daß die Schubstange (4) ein Einsatzelement (13) aufweist, um den Kompressionsraum (18a) in der Schubstange (4) zu vermindern.

12. Luftpumpeneinsatz nach einem oder mehreren der Ansprüche 1 - 11,
**dadurch gekennzeichnet**, daß das Einsatzelement (13) durch die Öffnung (6f) mit dem Kompressionsraum (18) verbunden ist und am anderen Ende den Ventilkopf (7) ausweist.

13. Luftpumpeneinsatz nach Anspruch 11,
**dadurch gekennzeichnet**, daß das Einsatzelement (13) am einen Ende durch den der Schubstange (4) angeordneten Verschlußstopfen (6) gehalten ist.

## Claims

1. Pump insertion means for the seat tube of a two-wheeler,
particularly of a bicycle, having, in a pump pressure tube (1), an axially movable sliding rod (4) with a piston, the sliding rod (4) having a valve cap (7) which can be put onto the valve of a tyre, whereas the air compressed by the sliding rod (4)in the pump pressure tube (1), is guidable through the sliding rod (4) to the valve cap (7),
**characterized in that**
the pump pressure tube (3) has a clamping device (17) for fastening of the pump insertion means (2) in the seat tube (1).

2. Pump insertion means of claim 1,
**characterized in that**
the clamping device (17) has an elastic clamp ring (16), which can be pressed together by a clamp plate (15) located in the pump pressure tube (3).

3. Pump insertion means of claim 2,
**characterized in that**
the clamp plate (15) has a grub screw (15a) going through the clamp ring (16), whereas the grub screw (15a) can be screwed onto a thread piece (14) located in the pump pressure tube.

4. Pump insertion means of claim 3,
**characterized in that**
the thread piece (14) seals the pump pressure tube (3) at one end.

5. Pump insertion means of claim 1,
**characterized in that**
the sliding rod (4) can be led in a closing cap (5) located in the pump pressure tube (1).

6. Pump insertion means of claim 1,
**characterized in that**
the sliding rod (4) is realised as a piston ans has on one end a closing top (6) and a compression strap (12).

7. Pump insertion means of claim 1,
**characterized in that**
an aperture (6f) is provided for connecting the compression room (18) of the pump pressure tube and the sliding rod (4).

8. Pump insertion means of claim 5,
**characterized in that**
a slot (5a) is provided between the closing cap (5) and the sliding rod (4) in order to let in some air.

9. Pump insertion means of one of the claims 1 - 8,
**characterized in that**
in order to let air into the pressure room (18), a circular aperture (6a, 6b) is provided between the pump pressure tube (3) and the closing top (6) or between the compression strap (12) and the vertical leg 6e of the closing top (6), respectively.

10. Pump insertion means of claim 9,
**characterized in that**
compression strap (12) is located in an axially movable position in the closing top (6), whereas the strap (12) opens the circular aperture (6a) during suction and seals the circular aperture (6a) during compression.

11. Pump insertion means of claim 7,
**characterized in that**
the sliding rod (4) has an insertion means (13) for reducing the compression room (18a) in the sliding rod (4).

12. Pump insertion means of one of the claims 1 - 11,
**characterized in that**
the insertion means (13) is connected with the compression room (18) by means of the aperture (6f) and that it has at its other end the valve cap (7).

13. Pump insertion means of claim 11,
**characterized in that**
the insertion means (13) is maintained in place at one end by the closing top (6) located in the sliding rod (4).

## Revendications

1. Ensemble pompe de gonflage s'introduisant dans le tube de selle d'un véhicule à deux-roues, plus particulièrement d'une bicyclette, avec une bielle à piston mobile dans l'axe du tube de force de la pompe de gonflage, la bielle ayant une tête de valve pouvant être placée sur la valve d'une roue et l'air comprimé par la bielle dans le tube de force de la pompe de gonflage pouvant être mené vers la tête de valve en passant par la bielle,
**caractérisé en ce que**
le tube de force de la pompe de gonflage (3) possède un dispositif de serrage (17) pour fixer l'ensemble pompe de gonflage (2) dans le tube de selle (1).

2. Ensemble pompe de gonflage selon la revendication 1,
**caractérisé en ce que**
le dispositif de serrage (17) comprend une bague de serrage élastique (16) pouvant être comprimée par un disque de serrage (15) reçu par le tube de force de la pompe de gonflage (3).

3. Ensemble pompe de gonflage selon la revendication 2,
**caractérisé en ce que**
le disque de serrage (15) possède une goupille filetée (15a) traversant la bague de serrage (16) et pouvant être vissée dans un manchon taraudé (14) situé dans le tube de force de la pompe de gonflage.

4. Ensemble pompe de gonflage selon la revendication 3,
**caractérisé en ce que**
le manchon taraudé (14) obture hermétiquement le tube de force de la pompe de gonflage (3) à son extrémité.

5. Ensemble pompe de gonflage selon la revendication 1,
**caractérisé en ce que**
la bielle (4) peut être guidée dans un chapeau obturateur (5) placé dans le tube de force de la pompe de gonflage (1).

6. Ensemble pompe de gonflage selon la revendication 1,
**caractérisé en ce que**
la bielle (4) en tant que piston possède à son extrémité un tampon obturateur (6) et une patte de compression (12).

7. Ensemble pompe de gonflage selon la revendication 1,
**caractérisé en ce que**
une ouverture (6f) dans la chambre de pression (18) du tube de force de la pompe de gonflage et donnant sur la bielle (4) est prévue.

8. Ensemble pompe de gonflage selon la revendication 5,
**caractérisé en ce que**
une fente (5a) est prévue entre le chapeau obturateur (5) et la bielle (4) pour laisser entrer l'air.

9. Ensemble pompe de gonflage selon l'une ou plusieurs des revendications 1 - 8,
**caractérisé en ce que**
pour laisser entrer l'air dans la chambre de pression (18), une fente annulaire (6a, 6b) est prévue entre le tube de force de la pompe de gonflage (3) et le tampon obturateur (6) ou entre la patte de compression (12) et le collet (6e) du tampon obturateur (6) respectivement.

10. Ensemble pompe de gonflage selon la revendication 9,
**caractérisé en ce que**
la patte de compression (12) est reçue par le tampon obturateur (6) de façon à être axialement mobile, la patte (12) libérant la fente annulaire (6a) pendant l'aspiration et obturant la fente annulaire (6a) pendant la compression.

11. Ensemble pompe de gonflage selon la revendication 7,
**caractérisé en ce que**
la bielle (4) possède un renfort (13) pour réduire l'espace de compression (18a) dans la bielle (4).

12. Ensemble pompe de gonflage selon l'une ou plusieurs des revendications 1 - 11,
**caractérisé en ce que**
le renfort (13) est relié à l'espace de compression (18) par l'ouverture (6f) et qu'il possède à son autre extrémité la tête de valve (7).

13. Ensemble pompe de gonflage selon la revendication 11,
**caractérisé en ce que**
le renfort (13) est maintenu à l'une de ses extrémités par le tampon obturateur (6) placé dans la bielle (4).
